Europäisches Patentamt

European Patent Office

Office européen des brevets

(19)

(11) **EP 1 067 708 A1**

(12) **EUROPEAN PATENT APPLICATION**

(43) Date of publication:
**10.01.2001 Bulletin 2001/02**

(51) Int Cl.⁷: **H04B 7/005**

(21) Application number: **99440189.1**

(22) Date of filing: **09.07.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **ALCATEL**
**75008 Paris (FR)**

(72) Inventors:
• **Cordier, Christophe**
**75017 Paris (FR)**

• **Fratti, Marco**
**78100 St. Germain en Laye (FR)**

(74) Representative: **Scheer, Luc et al**
**ALCATEL,**
**Intellectual Property Department,**
**Postfach 300 929**
**70449 Stuttgart (DE)**

(54) **Fast power control method used in a CDMA cellular radio system and corresponding transmitter**

(57)    The present invention concerns a power control method used in a transmitter for transmitting data to a receiver with a transmission power level which is function of TPC (Transmit Power Command) bits sent by this receiver.

According to the invention, the method consists in resetting the transmission power to a reference level, if there is an indication that the last received TPC bits are possibly erroneous.

Fig. 6

**Description**

The present invention relates to a fast closed-loop power control method used in a CDMA cellular radio system. More precisely, the invention proposes a solution to counteract the effect of errors in transmission of power control commands, also called TPC (Transmit Power Control) commands, in a FDD transmission system.

In a CDMA cellular radio system, base stations communicate in CDMA mode with mobile stations within their coverage areas and TPC commands are sent from the base stations to the mobile stations (for uplink power control, i.e. in order to control the power of the signals sent by the mobile stations). TPC commands are also sent from the mobile stations to the base stations (for downlink power control, i.e. in order to control the power of the signals sent by the base stations).

Thus, generally speaking, TPC commands are sent from a transmitter to a receiver in order to control the output power of this receiver. This is called closed-loop power control.

The requests made by a transmitter for an increase or a decrease in power are generally of a binary type (a request for increased power causes a logic level 1 to be transmitted whereas a request for a decrease in power causes a logic level 0 (or -1) to be transmitted). TPC commands are transmitted by means of TPC bits (there can be more than one bit for a command) constituting requests for increase or decrease of the current transmit power.

Fast power control is used to reduce fluctuations in the Signal-to-Interference Ratio (SIR) experienced at the receiver, due to fading channel characteristics. To this end, the power control procedure functions in a closed-loop manner: the receiver compares the actual SIR with the desired one and generates a power control command (TPC bits) indicating the transmitter to increase or decrease the transmit power value. The power adjustment commands are conveyed by means of the TPC bits which can be embedded in the data stream. Such a method is described in US-5,570,353 that is included herein by reference.

In a typical FDD-CDMA radio network, for uplink power control, the TPC bits are embedded in the downlink data stream corresponding to each base station and therefore transmitted on the traffic channel. The downlink data stream is for example divided in frames.

For downlink power control, the TPC bits are transmitted on a control channel, different from the traffic channel.

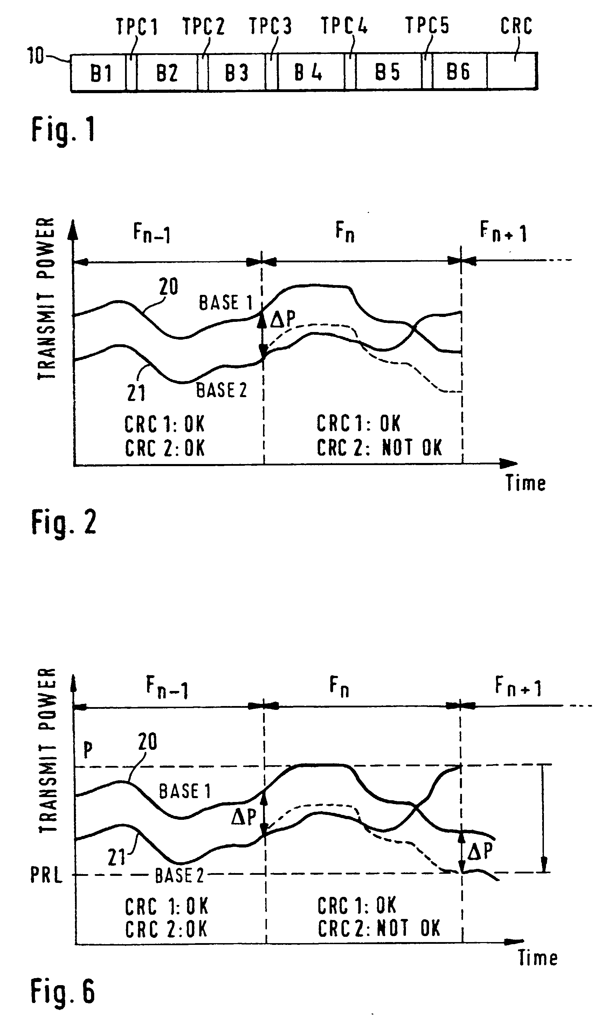

Figure 1 represents an example of a data frame 10 in which TPC bits are embedded.

The date frame 10 contains blocks of data B1 to B6 that are separated by TPC bits TPC1 to TPC5. A field named CRC (Cyclic Redundancy Check) is provided at the end of the frame 10 to check if an error has occured in the transmission of the data frame. Such a frame has for example a duration of 10 ms and comprises 16 time slots. In one embodiment, each time slot comprises two TPC bits (corresponding to a single command) and the CRC field comprises 8 bits.

Such a frame is transmitted to a mobile terminal from each base station that is in macrodiversity mode with this mobile terminal.

For uplink power control, independent TPC bits are received from all active base stations (an active base station is in the process of communicating with the mobile, possibly during soft handover), and the mobile station selects the most appropriate one.

For downlink power control, all active base stations receive the same TPC bits calculated by the mobile station and transported by a unique uplink data stream (the same signal is broadcast to all active base stations), like the one shown in Fig.1. This corresponds to a macrodiversity communication, where a mobile station simultaneously communicates with several base stations (base stations of the active set of the mobile terminal). Hence, all active base stations should follow the same power profile in response to identical TPC bits. Such a scheme maintains a constant offset in the transmit powers of the active base stations. This "constant offset" ensures permanency of the power distribution among the active set such as determined by the Radio Network Controller (RNC) to which the different base stations are connected.

However, to reduce the processing delay of these commands, the TPC bits are sent with a limited protection and thus bear an error bit rate significantly higher than that of the data bits, because they are sent with a lower redundancy than the data bits. Repeated transmission errors in TPC bits may cause the transmit power to drift away from the ideal value. In the long run, such errors will produce a divergence of the power control procedure. This lack of stability represents a noticeable shortcoming of the power control scheme.

In a particular embodiment, the CRC bits are used for detecting an unusual error error rate on the TPC bits: If such an unusual error occurs, the CRC bits are bad (not OK).

In particular, for downlink power control, identical TPC bits are demodulated independently at each base. Since the error pattern differs from one base station to the other, the actual transmit powers of active base stations will drift away from the targets assigned by the RNC (the "constant offset" condition is no longer respected), thereby disturbing the power allocation imposed by the RNC. This phenomenon is called the "random walk" effect. In addition to the risk of power control divergence, "random walk" results in a capacity loss due to an imperfect power allocation.

In the sequel, "random walk" designates any drift in transmit power caused by TPC errors.

Figure 2 represents this random walk effect. The two characteristics 20, 21, represent the transmit power evolution in function of time (over two frames $F_{n-1}$

and $F_n$) for two base stations in respect to a given mobile. The transmit power evolution 20 of a first base station is controled by TPC bits sent on the uplink path, at a frequency corresponding to the occurence of TPC bits in a frame like represented in Fig.1. The same remark is valid for the power evolution 21 of a second base station, this second base station receiving in principle the same TPC bits from the same terminal.

In an idealized case, during the first frame $F_{n-1}$, no transmission error occurs either on TPC bits or on data bits (CRC1 and CRC2 are good (OK), i.e. they do not show that an error has occured in the frames received by the base stations). Therefore, the characteristics 20 and 21 follow the same commands, it means that they increase or decrease their transmission power according to the TPC bits that they receive. A constant power offset ΔP is therefore observed between the power variations 20 and 21.

Let us now assume that during the next frame $F_n$ transmission errors occur on the TPC bits (and possibly also on the data bits) received by the second base station (CRC2 is not OK) and that no transmission error occurs on the TPC bits received by the first base station (CRC1 is OK) - the error pattern differs from one base station to the other. Instead of following the dashed characteristic that would correspond to TPC bits received without error, a drift or power deviation is then observed on the characteristic 21, this power deviation corresponding to the before mentioned "random walk".

In the prior art, no countermeasure was taken against this phenomenon. More precisely, if an error occured in a received frame (CRC not OK), the complete data frame was not taken into account (i.e. erased). But the power deviation is accepted and the next received TPC bit (the first of the frame $F_{n+1}$) is used for increasing or decreasing the transmit power used at the end of frame $F_n$, even if this transmit power does not correspond to a target value. Therefore, the "random walk" effect spans more than a single-frame duration.

The same problem arises at the level of a mobile terminal that is receiving erroneous TPC bits from a base station or at the level of a base station which does not participate to a macrodiversity communication.

The purpose of the present invention is to stabilize the power control procedure to ensure that the "random walk" effect does not span more than a single-frame duration.

This is achieved with the data transmission method described in the preamble of claim 1, characterized in that the transmission power is reset to a reference level, if there is an indication that the last received TPC bits are possibly erroneous.

Thus, when an erroneous data frame is encountered, an a-posteriori power correction is accomplished to suppress the power deviation due to the sequence of TPC bits supported by this erroneous frame.

In one embodiment, the reference level corresponds to the average transmission power used since a predetermined period of time. It is also possible to reset the transmission power to the half of the maximum transmission power.

In a further embodiment, the reference level is function of the last transmission power level derived from a TPC bit for which there was no indication that this TPC bit was erroneous.

The method according to the invention can advantageously be applied when the receiver is a mobile terminal communicating with at least two transmitters, these transmitters being part of base stations of a CDMA network, the reference level being function of the last power level used by a first of said base stations if there is an indication that the TPC bits received by a second of said base stations are possibly erroneous, this last transmission power level being used for determining said transmission power level to which the power level of said second base station is reset.

In this case, profit is taken of the fact that another base station does not detect an error on the received TPC bits.

The method according to the invention is preferably implemented in a controller of the base stations, for downlink power control purposes. The method according to the invention can indifferently be used in a mobile terminal or in a base station.

In the following, the invention will be described in greater detail with reference to the examples of the accompanying drawings, in which:

- Figure 1 represents an exemple of a data frame in which TPC bits are embedded;
- Figure 2 represents the random walk effect experienced by a base station;
- Figure 3 represents the implementation of the method according to the present invention;
- Figure 4 depicts the application of the power reset scheme according to the invention;
- Figure 5 shows two successive frames received at the level of a mobile terminal on a downlink stream;
- Figure 6 shows a particular implementation of the method according to the present invention;
- Figure 7 shows a radiocommunication system in which a method according to the invention can be implemented.

Figures 1 and 2 have been presented in relation to the prior art.

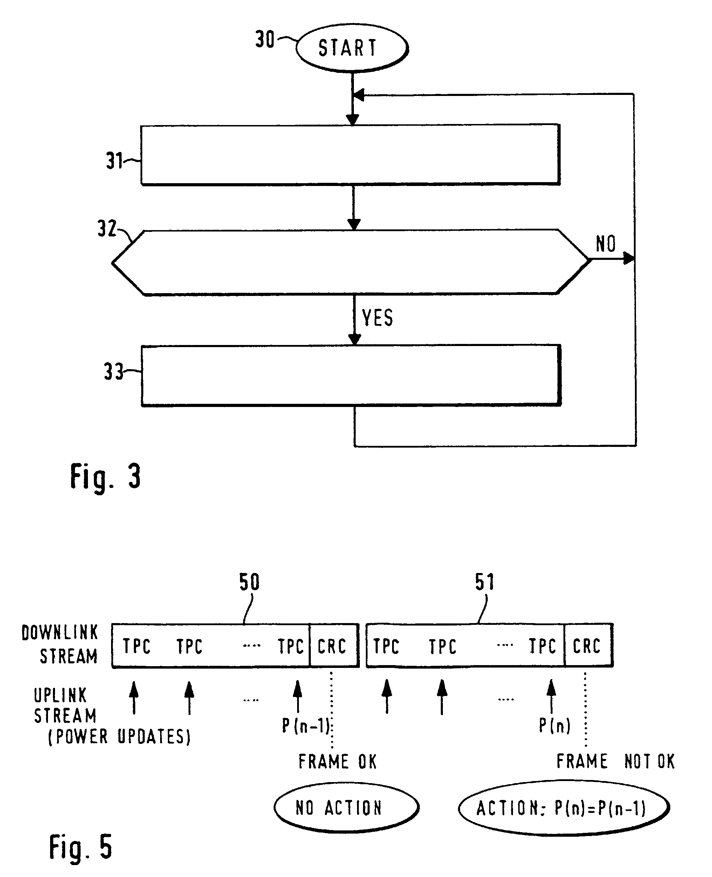

Figure 3 represents the implementation of the method according to the present invention.

After a start step 30, the method of the invention consists in (step 31) receiving TPC bits and applying the corresponding power control. Each time a TPC command is received, the transmit power is increased or decreased according to the value of the TPC bits. The power increase or decrease value corresponding to a TPC command is fixed. At step 32 (end of frame reception), it is tested if the TPC bits already used in step 31 are possibly erroneous or not. This test 32 can for example consist in calculating a CRC or a single bit. Other methods are available, for example adding a redundancy to the sent bits (e.g. convolutional coding).

When the TPC bits are embedded in the data stream, the calculated CRC is not only representative of the reliability of the TPC bits, but it takes also in account the reliability of the data bits. That is why if the CRC shows that an error has occured, it does not necessarily mean that at least one TPC bit was corrupted: The CRC error can also result from a bad received data bit. But when the TPC bits are less protected against transmission errors than the data bits, detected errors mostly originate from bad received TPC bits.

In another embodiment, it is possible to provide a CRC field concerning only the TPC bits. If such a CRC shows that an error has occured, one can be sure that at least a TPC bit was corrupted.

When the TPC bits are not embedded in a data stream but transmitted on another channel than the data bits, for example on a code-multiplexed control channel, the same remark is valid.

In another embodiment, the TPC bits are embedded in the data stream for which CRC has already been calculated. Then, the CRC does not take in account these TPC bits. However, in the case where the TPC bits are less protected than the data bits (less redundancy for example), if the CRC shows that an error has occured on the data bits, there is a high probability that at least one error has also occured on the TPC bits. Then, a false CRC is an indication that the TPC bits are possibly erroneous.

Regarding figure 3, if the CRC check does not show that a transmission error has occured, step 31 is reconducted. If there is an indication that the TPC bits are possibly erroneous, then (step 33) the invention proposes to reset the transmission power to a reference level, in order that the random walk phenomenon does not span over more than one frame. The method begins thereafter with step 31.

The reference level corresponds, in a first embodiment, to the average transmission power used since a predetermined period of time. One can thus be sure that the reference power level to which the power is reset corresponds approximately to the power transmission level that would have been used if no error had occured in the received TPC bits. The predetermined period of time is preferably short and extends for example on the two or three frames last received frames for which no error was encountered.

In a second embodiment, the reference level is function of the last transmission power level derived from a TPC bit for which there was no indication that this TPC bit was erroneous.

Figure 4 will depict more clearly this concept.

Only one receiver is considered. This corresponds to the most general case, the receiver being a mobile station or a base station.

The TPC bits received during a frame $F_{n-1}$ are not corrupted (CRC is OK) and no special action has to be taken. At the end of the next frame $F_n$, it is established that at least a TPC bit previously received and used for power correction during this frame has been possibly corrupted. On the figure, the transmission has reached a level P that is possibly not correct. Then, the presented embodiment proposes to reset the transmission power P to a level $PRL_{n-1}$ that is function of the last transmission power level derived from a TPC bit for which there was no indication that this TPC bit was erroneous. The transmission power $PRL_{n-1}$ to which the power is reset corresponds here to the transmission power that was used at the end of the frame $F_{n-1}$ because the CRC for this frame did not show that an error could have occured on the TPC bits received during this frame (CRC was OK).

Obviously, one cannot alter the sequence of power variations that occurred before the end of the frame. This means that the random walk phenomenon cannot be avoided during the reception of the frame $F_n$ because the CRC check of frame $F_n$ can only be realised after having received all bits of this frame, or at least all the TPC bits of this frame. However, resetting the transmission power to PRL stabilizes the power control procedure.

The transmission power level used after power reset to $PRL_{n-1}$ is function of the next received set of TPC bit (the first one received during frame $F_{n+1}$). At the end of frame $F_{n+1}$, if the CRC check is OK, no power reset will be realised, but if the CRC check shows that some TPC bits were again probably erroneous, the power level will again be reset to the level $PRL_{n-1}$.

The power level to which the power is reset is preferably the last power level derived from a TPC bit for which there was no indication that this TPC bit was possibly erroneous. This avoids having to store several power levels for calculating an average transmission power.

Figure 5 shows two successive frames received at the level of a mobile terminal on a downlink stream.

During frame 50, the transmission power updates for the uplink stream are realised in a normal manner, in function of the TPC bits received on the downlink stream, since the CRC check realised at the end of frame 50 does not indicate that a received bit was erroneous. No specific action is therefore undertaken at the end of frame 50. During frame 51, at least a received bit is considered as being false by the CRC check. The frame is thus considered as being bad and the transmission power P(n) is reset to the last transmission power P(n-1) for which the corresponding TPC bit was not erroneous.

Thus, in this embodiment, the transmit power is reset to the value calculated at the end of the last valid frame among the preceding ones. This method applies equally in both directions (up- and downlink).

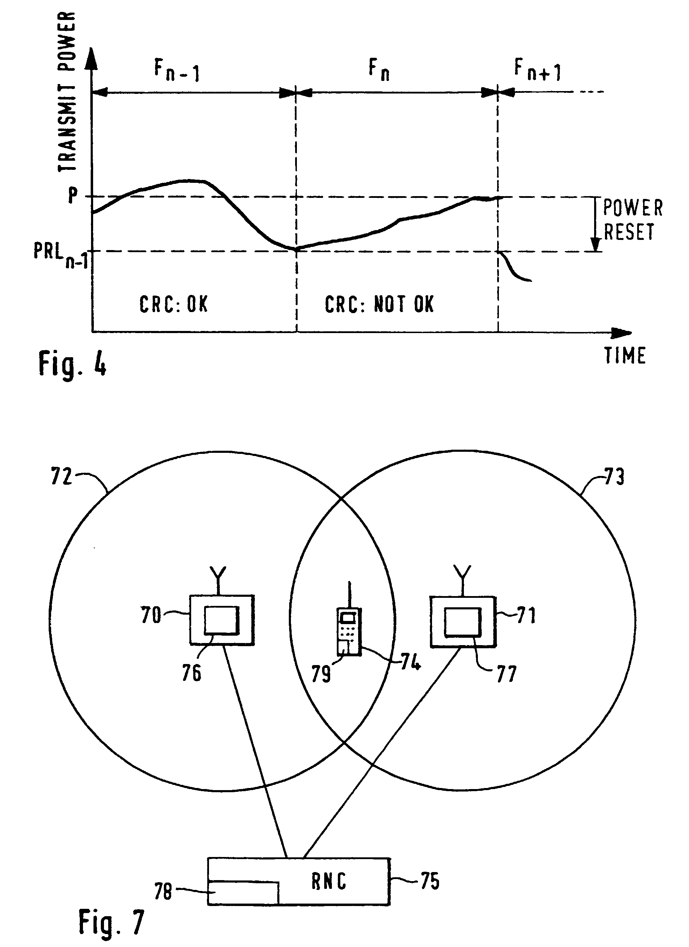

Figure 6 shows a particular implementation of the method according to the present invention.

A macrodiversity communication (soft handover) is here considered, i.e. a mobile terminal receives the same signal from at least two base stations. This situation corresponds to that one previously described in reference to Fig. 2 and the corresponding description concerning what happens during frames $F_{n-1}$ and $F_n$ is also valid. The difference consists here in that, at the end of frame Fn, after having detected that the CRC of the second base is not OK, the transmission power P of this second base station is reset to the level PRL corresponding to the power offset $\Delta P$ retrieved from the last power level used by the first base station, for which the CRC was correct. Thus, the power level PRL is function of the power level used by another base station with which the terminal is also in communication.

More generally speaking, the RNC receives from each base station a different copy of the same original data frame, undergoing different channel conditions. In the situation where at least one of the frames is good while others are bad, then the power profile corresponding to the good frame is more reliable than that corresponding to the bad frames. Hence, the power profile of those base stations receiving a good data frame can be used to correct the power of the base stations affected by a bad data frame. Specifically, the power variation over the last frame period is preferably calculated for the base station having the best frame quality, and the very same power variation is applied to all "bad-framed" base stations, starting from the transmit power value at the beginning of the last frame:

$$\Delta P(n)_{best} = P_{best}(n) - P_{best}(n-1)$$

$$P_{bad}(n) = P_{bad}(n-1) + \Delta P(n)_{best}$$

where P(n) denotes the transmit power after the nth frame.

This power correction is meant to suppress the accumulated deviation due to erroneous TPC bits during the last data frame.

In a preferred embodiment, if frame quality comparison can be handled, the RNC instructs the base station having the best frame quality to send back to the RNC the quantity $\Delta P(n)best$ corresponding to the total power variation encountered during the n-th frame for the signal transmitter to the considered mobile station.

Then, the RNC dispatches the $\Delta P(n)best$ value to all base stations whose n-th frame was received with a bad CRC indication, so that they can correct their transmit power according to the formula:

$$P_{bad}(n) = Pbad(n-1) + \Delta P(n)best$$

In a particular embodiment, only "bad-framed" base stations receive a power correction indication from the RNC. If it is desired to systematically transmit infos from the RNC to the base stations, all base stations (including "good-framed" ones) receive a power correction value from the RNC, the given correction being 0 for the "good-framed" base stations and being $\Delta P(n)best$ for all bad framed base stations.

If no quality comparison of frames at RNC is possible, than $\Delta Pbest$ can be calculated for the base station whose frame was received first (before the others) and with a good CRC.

Like announced, the power level to which the signal is reset can also be fixed, for example corresponding to the half of the maximum transmit power (e. g. 1 Watt if the max. power is 2 Watts).

Another advantage of the present invention is that the capacity of the transmission network is increased due to this enhanced power management.

The method of the present invention can be used for uplink and downlink control, i.e. independently of the fact that the TPC bits are transmitted apart or embedded in the data stream.

Figure 7 shows a CDMA radiocommunication system in which a method according to the invention can be implemented.

In this system, two base stations 70 and 71 are considered. Base station 70 ensures communication with mobile terminals present in the cell 72 and base station 71 ensures communication with mobile terminals present in the cell 73. A mobile terminal 74 is present in the cells 72 and 73, this allowing macrodiversity communication. The base stations 70 and 71 are controlled by a radio network controller 75 (RNC).

The mobile terminal 74, the base stations 70 and 71 and the RNC 75 constitute transmitters and each of them preferably comprises means (respectively referenced 79, 76, 77 and 78) for resetting the transmission power to a reference level, if there is an indication that the last received TPC bits are possibly erroneous.

Like previously mentioned, this reference level corresponds preferably to the average transmission power used since a predetermined period of time.

In the terminal 74 and in the base stations 70 and 71, the reference level can be function of the last used transmission power level derived from a TPC bit for which there was no indication that this TPC bit was erroneous.

At the level of the RNC 75, it is possible to control the transmit power of a "bad framed" base station by using the power level used at the level of a "good framed » base station.

Even though the invention is described above with reference to the example according to the accompanying drawings, it is clear that the invention is not limited thereto, but it can be varied in many ways within the inventive idea disclosed in the appended claims.

## Claims

1. A power control method used in a transmitter (70, 71, 74, 75) for transmitting data to a receiver (70, 71, 74) with a transmission power level which is function of TPC bits sent by said receiver (70, 71, 74), said method consisting in resetting (33) the transmission power to a reference level (PRL), if there is an indication that the last received TPC bits are possibly erroneous.

2. A method according to claim 1, wherein said reference level (PRL) corresponds to the average transmission power used since a predetermined period of time.

3. A method according to claim 1 or 2, wherein said reference level (PRL) is function of the last transmission power level derived from a TPC bit for which there was no indication that this TPC bit was erroneous.

4. A method according to any one of the claims 1 to 3, wherein said receiver is a mobile terminal (74) communicating with at least two of said transmitters (70, 71), said transmitters being part of base stations (70, 71) of a CDMA network, said reference level (PRL) being function of the last power level used by a first of said base stations (70, 71) if there is an indication that the TPC bits received by a second of said base stations (70, 71) are possibly erroneous, said last transmission power level being used for determining said transmission power level to which the power level of said second base station is reset.

5. A method according to claim 4, said method being implemented in a controller (75) of said base stations (70, 71).

6. A method according to any one of claims claims 1 to 3, wherein said transmitter is a mobile terminal (74).

7. A method according to any one of the claims 1 to 3, wherein said transmitter is a base station (70, 71) of a CDMA network.

8. A method according to any one of the claims 1 to 7, wherein said indication that the last received TPC bits are possibly erroneous is the result of a CRC check.

9. A transmitter (70, 71, 74, 75) for transmitting data to a receiver (70, 71, 74) with a transmission power level which is function of TPC bits sent by said receiver (70, 71, 74), said transmitter (70, 71, 74, 75) comprising means (76, 77, 78, 79) for resetting the transmission power to a reference level (PRL), if there is an indication that the last received TPC bits are possibly erroneous.

10. A transmitter according to claim 9, wherein said reference level (PRL) corresponds to the average transmission power used since a predetermined period of time.

11. A transmitter according to claims 9 or 10, wherein said reference level (PRL) is function of the last transmission power level derived from a TPC bit for which there was no indication that this TPC bit was erroneous.

12. A transmitter according to any of the claims 9 to 11, wherein said transmitter is a mobile terminal (74).

13. A transmitter according to any of the claims 9 to 11, wherein said transmitter is a base station (70, 71) of a CDMA network.

14. A transmitter according to any of the claims 9 to 11, wherein said transmitter is a radio network controller (75).

15. A transmitter according to claim 14, wherein it comprises means (78) for resetting the transmission power of a base station (70, 71) connected to said radio network controller (75) to a reference level (PRL), if there is an indication that the last TPC bits received by said base station (70, 71) are possibly erroneous.

16. A transmitter according to claim 15, wherein said reference level (PRL) is function of the last power level used by another of said base stations (70, 71) for which the last received TPC bits are not erroneous.

EP 1 067 708 A1

Fig. 1

Fig. 2

Fig. 6

7

30 — START

31

32 — NO

YES

33

**Fig. 3**

50          51

DOWNLINK
STREAM    | TPC | TPC | .... | TPC | CRC | | TPC | TPC | .... | TPC | CRC |

UPLINK
STREAM
(POWER UPDATES)          P(n-1)                          P(n)

FRAME OK                          FRAME NOT OK

NO ACTION          ACTION: P(n)=P(n-1)

**Fig. 5**

**Fig. 4**

**Fig. 7**

EP 1 067 708 A1

| | European Patent Office | EUROPEAN SEARCH REPORT | Application Number EP 99 44 0189 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 98 56120 A (ERICSSON TELEFON AB L M) 10 December 1998 (1998-12-10) * page 5, line 26 - page 6, line 12 * * page 9, line 10 - page 11, line 10 * * page 11, line 20 - line 27 * * page 12, line 14 - line 19 * * figures 1,2,5B * | 1,2,6,7, 9-14 | H04B7/005 |
| A | | 3-5,8, 15,16 | |
| A | WO 99 31819 A (ERICSSON TELEFON AB L M) 24 June 1999 (1999-06-24) * page 14, line 13 - page 18, line 2 * * figures 4-6 * | 1,9 | |
| A | EP 0 810 743 A (NIPPON ELECTRIC CO) 3 December 1997 (1997-12-03) * column 7, line 29 - column 8, line 34 * * column 9, line 22 - line 28 * * column 9, line 54 - column 10, line 2 * * column 10, line 10 - line 16 * * figure 3 * | 1,9 | |
| | | | TECHNICAL FIELDS SEARCHED (Int.Cl.7) H04B |

The present search report has been drawn up for all claims

| Place of search | Date of completion of the search | Examiner |
|---|---|---|
| THE HAGUE | 24 November 1999 | Gkeli, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

10

**ANNEX TO THE EUROPEAN SEARCH REPORT
ON EUROPEAN PATENT APPLICATION NO.**

EP 99 44 0189

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-1999

| Patent document cited in search report | | Publication date | Patent family member(s) | | Publication date |
|---|---|---|---|---|---|
| WO 9856120 | A | 10-12-1998 | AU | 7702498 A | 21-12-1998 |
| | | | AU | 8048298 A | 21-12-1998 |
| | | | WO | 9856200 A | 10-12-1998 |
| WO 9931819 | A | 24-06-1999 | AU | 1795599 A | 05-07-1999 |
| EP 0810743 | A | 03-12-1997 | JP | 2785804 B | 13-08-1998 |
| | | | JP | 9321699 A | 12-12-1997 |
| | | | AU | 2368697 A | 04-12-1997 |
| | | | CA | 2206365 A | 30-11-1997 |
| | | | CN | 1167411 A | 10-12-1997 |

EPO FORM P0459

For more details about this annex : see Official Journal of the European Patent Office, No. 12/82